# EUROPÄISCHE PATENTSCHRIFT

(11) **EP 3 553 043 B1**
(45) Veröffentlichungstag und Bekanntmachung des Hinweises auf die Patenterteilung: **12.05.2021**
(21) Anmeldenummer: 19165754.3
(22) Anmeldetag: 28.03.2019
(51) Int. Cl.: C04B 40/00, C04B 24/26

(54) **VERWENDUNG VON CELLULOSEETHER-COMPOUNDS ZUR VERLÄNGERUNG DER OFFENEN ZEIT UND VERBESSERUNG DER BENETZBARKEIT VON ZEMENTÄREN MÖRTELN**
USE OF CELLULOSE ETHER COMPOUNDS FOR INCREASING THE OPEN TIME AND IMPROVING THE WETTABILITY OF CEMENT-BASED MORTARS
UTILISATION DE COMPOSÉS D´ÉTHER DE CELLULOSE POUR PROLONGER LE TEMPS OUVERT ET AMÉLIORER LA MOUILLABILITÉ DES MORTIERS À BASE DE CIMENT

(30) Priorität: 29.03.2018 DE 102018107556
(43) Veröffentlichungstag der Anmeldung: 16.10.2019
(73) Patentinhaber: SE Tylose GmbH & Co.KG, 65203 Wiesbaden (DE)
(72) Erfinder: Klehr, Heiner, 55129 Mainz (DE); Bartz, Uwe, 55218 Ingelheim (DE); Kempf, Harald, 56414 Dreikirchen (DE)
(74) Vertreter: Plate, Jürgen

(56) Entgegenhaltungen:
- WO-A1-2017/108865
- Ingo Müller: "Influence of Cellulose Ethers on the Kinetics of Early Portland Cement Hydration", 31. Dezember 2016 (2016-12-31), Universitätsverlag Karlsruhe, Karlsruhe, XP002793344, ISBN: 978-3-86644-077-7 Seite 92, * Seite 92 *

## Beschreibung

Die Erfindung betrifft die Verwendung von wasserlöslichen Celluloseethern, in die ein oder mehrere flüssige Entschäumer eingearbeitet sind.

Zum Verbinden oder Beschichten von Bauteilen werden in der Bauindustrie u.a. zementäre Kleber, Putze, Spachtelmassen oder Wärmedämmverbundsysteme eingesetzt. Diese Systeme sind Mischungen aus einem oder mehreren Bindemitteln (z.B. Zement, Kalkhydrat), Füllstoffen (z.B. Sande mit verschiedenen Körnungen) und anderen Additiven, wie Celluloseether, Luftporenbildner, Dispersionspulver und Stärke und Stärkederivate wie Stärkeether. Sie werden werksseitig so hergestellt, dass sie zum Verarbeiten nur noch mit Wasser angemischt werden müssen. Diese Baustoffe werden Werktrockenmörtel genannt.

Es ist Stand der Technik, dass Fliesenkleber auf Zementbasis im Dünnbettverfahren appliziert werden. Dazu wird ein ebener Untergrund benötigt, auf dem mit einem Zahnspachtel der Kleber in gleichmäßiger Schichtdicke aufgetragen wird. In den so aufgetragenen Klebemörtel werden die Fliesen vollflächig eingelegt und ausgerichtet. Um möglichst rationell und effizient arbeiten zu können, ist es Ziel der Verarbeiter, eine möglichst große Fläche mit Fliesenkleber vorzubereiten und dann die Fliesen darin einzulegen. Dafür muss der Kleber eine ausreichend lange offene Zeit haben, um zu gewährleisten, dass alle Fliesen möglichst komplett und vollflächig mit dem Klebemörtel benetzt sind. Dünnbettkleber bestehen aus Zement, Sand, Gesteinsmehl und Celluloseethern. Weitere Additive, wie Dispersionspulver, Zement-Beschleuniger, Stärkederivate, anorganische Verdicker und Fasern können zur Optimierung der Verarbeitungs- und Festmörteleigenschaften ebenfalls enthalten sein.

Die offene Zeit von Fliesenklebern wird nach ISO 13007 bzw. EN 1346 durch Haftzugfestigkeitswerte nach definierten Einlegezeiten bestimmt. Parallel werden häufig auch sogenannte Benetzungsversuche durchgeführt, bei denen saugfähige Fliesen, ebenfalls nach definierten Zeiten, in das Mörtelbett eingelegt werden und danach der prozentuale Anteil der Benetzung bewertet wird. Die offene Zeit ist u.a. abhängig vom Wassergehalt des Klebers. Verkürzt wird die offene Zeit oft durch eine unerwünschte Hautbildung an der Oberfläche der Mörtel, die eine ausreichende Benetzung der Fliese verhindert, obwohl der Kleber im Inneren noch weich ist. Qualitativ hochwertige Fliesenkleber haben eine offene Zeit von mind. 30 Minuten.

Zur Verbesserung der Energieeffizienz werden Gebäude oft mit sogenannten Wärmedämmverbundsystemen (WDVS) verkleidet. Dazu wird eine Dämmplatte, bestehend aus EPS, XPS, PU, Mineralwolle u.a., an der Wand verklebt und eventuell auch verdübelt. Die Oberfläche der Dämmplatte wird mit einem Unterputz beschichtet, in den ein Armierungsgewebe eingebettet wird. Auch hierbei ist es wichtig, dass der Unterputz über eine lange verarbeitungsoffene Zeit verfügt, damit möglichst große Gewebeflächen in einem Arbeitsgang in den Unterputz eingearbeitet werden können und dabei vollflächig benetzt werden. Der Unterputz bestehen aus Zement, Sand, Celluloseether und Dispersionspulver. Zusätzlich können auch Stärke und Stärkederivate wie Stärkeether, Fasern und weitere Additive enthalten sein.

In der EP 2 966 049 A1 ist ein Verdicker für eine hydraulische Zusammensetzung offenbart. Er umfasst einen wasserlöslichen Celluloseether, einen Entschäumer, ein Biopoymer und gegebenenfalls ein wasser-reduzierendes Mittel. Der Celluloseether ist bevorzugt Methylcellulose, Ethylcellulose, Hydroxyalkylcellulose, wie Hydroxyethylcellulose oder Hydroxypropylcellulose oder eine Alkylhydroxyalkylcellulose, wie Methylhydroxyethylcellulose oder Methylhydroxypropylcellulose. Als Entschäumer sind Polyoxyalkylene, Silikonöle und auf Alkoholen, auf Fettsäuren oder auf Fettsäureestern basierende Mittel genannt. Das Biopolymer dient zur Stabilisierung des wasserlöslichen Celluloseethers in dem wasserreduzierenden Mittel. Bevorzugt sind Xanthan-Gum, Diutan-Gum, Welan-Gum und/oder Gellan-Gum. Das wasserreduzierende Mittel ist bevorzugt ein Polycarbonsäure-, Lignin- oder Melamin-Derivat, beispielsweise Copolymere von Acrylsäure, Methacrylsäure, Crotonsäure, Itaconsäure, oder Citraconsäure mit Polyalkylenglykol-mono(meth)acrylat, Styrol, Melamin/Sulfonsäure/- Formaldehyd-Kondensate oder ein Ligninsulfonsäuresalz.

Gegenstand der EP 1 884 503 B1 ist eine hydraulische Zusammensetzung für Putze oder Mörtel, die Zement und/oder Gips, ein anionisches Tensid mit der Fähigkeit zum Schäumen, ein nicht-ionisches Tensid mit der Fähigkeit zum Entschäumen und einen wasserlöslichen Celluloseether enthält. Das als Entschäumer wirkende Tensid ist vorzugsweise ein Polyether-Tensid, ein Silikon-Tensid, ein Alkohol-Tensid, ein Mineralöl-Tensid oder ein Pflanzenöl-Tensid.

In der EP 2 363 428 A1 ist eine Zusammensetzung offenbart, die zur Modifizierung der rheologischen Eigenschaften von zementären Mischungen dient. Sie umfasst ein Polysaccharid-Derivat, insbesondere einen Celluloseether, ein Siloxan und einen Entschäumer, der kein Siloxan ist. Der Entschäumer ist vorzugsweise pulverförmig. Als pulverförmige Entschäumer sind Tributylphosphat und Stearinsäuremetallsalze genannt. Flüssige Entschäumer, wie Polyoxyalkylenglykole oder ölige Kohlenwasserstoffe sollen an ein festes Trägermaterial, wie Diatomeenerde, Kieselsäure oder Calciumsilikat gebunden sein.

In der EP 2 190 800 B1 ist die Verwendung von quartären organischen Ammoniumverbindungen in Baustoffmassen zur Reduktion von Ausblühungen offenbart. Die Ammoniumverbindungen sind bevorzugt mit Celluloseethern vermischt. Dazu wird eine flüssige und/oder gelöste quartäre Ammoniumverbindung auf den Celluloseether aufgesprüht und damit vermischt.

In der EP 1 426 349 A1 ist ein Additiv für zementäre Zusammensetzungen offenbart. Es umfaßt ein Copolymer mit einer Vielzahl an Carboxylgruppen oder ein Salz davon, einen wasserlöslichen Celluloseether und einen festen oder flüssigen Entschäumer. Das Additiv dient zur Verbesserung der Verarbeitbarkeit der zementären Zusammensetzung und zur Verminderung des Spritzens bei Spritzbeton. Es verhindert zudem ein Bluten der Zusammensetzung nach deren Einbau.

Es ist Stand der Technik, dass Entschäumer (meistens Pulverentschäumer) in Baustoffen wie Betonen oder Bodenspachtelmassen eingesetzt werden. Das Ziel ist dabei, den Luftporengehalt zu reduzieren, um dadurch höhere Festigkeiten und glattere Oberflächen zu erreichen. Auch werden Mineralöle (flüssige Entschäumer) in Trockenmörteln, meistens in zementären Fliesenklebern, Fugenfüllern und Ausgleichsmassen, eingesetzt, um das Stauben beim Umfüllen und Anrühren deutlich zu reduzieren. Sie werden nicht als Entschäumer eingesetzt und wirken auch nicht entschäumend auf Trockenmörtel.

Wenn Entschäumer in Zementfliesenklebern oder WDVS-Putzen eingesetzt werden, wird der Mörtel über die Zeit immer mehr entschäumt, es tritt kein stabiler Zustand ein. Die Frischmörtelrohdichte liegt bei Zementfliesenklebern bei ca. 1,5 kg/l. Wenn Entschäumer zugesetzt werden, steigt die Frischmörtelrohdichte auf bis zu 2,0 kg/l nach 2 Stunden. Es entstehen mit fortschreitender Zeit immer größere Luftblasen. Je höher die Fischmörtelrohdichte, desto schlechter ist ein Zementfliesenkleber zu verarbeiten.

Flüssige Entschäumer werden üblicherweise in wässrigen Beschichtungen, wie Baufarben, Lackfarben, Abtönfarben, Holzlacken, pastösen Putzen, sowie in Klebstoffen, Betonen, Faserzementplatten, in der Landwirtschaft, der Papierindustrie, Biotechnologie, Lebensmittelindustrie und in chemischen Prozessen eingesetzt. Für Trockenmörtel werden flüssige Entschäumer nicht empfohlen und demzufolge auch nicht eingesetzt.

Es bestand die Aufgabe, einen entschäumten Celluloseether zu entwickeln, der eine zeitlich begrenzte Entschäumungswirkung hat. Mörtel, die diesen entschäumten Celluloseether enthalten, sollen über einen möglichst langen Zeitraum gut zu verarbeiten sein.

Überraschenderweise wurde festgestellt, dass flüssige Entschäumer, insbesondere Fettsäureester und Fettalkoholalkoxylate eine zeitlich beschränkte Entschäumungswirkung, bei guter Verarbeitbarkeit des Mörtels, haben. Ein natürliches Biopolymer als zusätzlicher Bestandteil, wie in der EP 2 966 049 beschrieben, ist für diese Wirkung nicht erforderlich. Ebenfalls wurde festgestellt, dass diese flüssigen Entschäumer in den Celluloseether eingearbeitet werden müssen. Eine Mischung aus einem Celluloseether und einem Pulver-Entschäumer (oder einem flüssigen Entschäumer auf einem festen anorganischen Träger) wirkt überraschenderweise nicht. Das gleiche gilt für die in der EP 2 190 800 B1 genannten quartären Ammoniumverbindungen.

Durch das erfindungsgemäße Compound aus einem Celluloseether mit flüssigem Entschäumer wird zusätzlich in Zementfliesenklebern, Putzen und WDVS-Armierungsputzen die Benetzung deutlich verbessert und die offene Zeit verlängert. Auch die Haftzugfestigkeiten von Fliesenklebern nach verschiedenen Lagerarten (Trocken, Nass, Warm, Frost/Tau nach ISO 13007 bzw. EN 1348) werden durch das erfindungsgemäße Compound signifikant verbessert.

Das Compound Celluloseether mit flüssigen Entschäumer wird hergestellt, in dem ein Celluloseether mit Wasser angeteigt wird, bis er 60 - 90% Feuchtgehalt hat. In diesen feuchten Celluloseether wird der flüssige Entschäumer eingearbeitet bzw. eingeknetet. Danach wird dieser Teig getrocknet und gemahlen oder in einem Prozess mahlgetrocknet, wie in großtechnischer Produktion von Celluloseethern üblich. Auch das Aufsprühen von flüssigen Entschäumern auf den trockenen Celluloseether ist eine Möglichkeit den Entschäumer einzuarbeiten. Als "flüssig" werden im Zusammenhang mit der vorliegenden Erfindung Entschäumer bezeichnet, die eine Viskosität von weniger als 250 mPa s, bevorzugt weniger als 150 mPa s aufweisen, gemessen mit Brookfield CAP 2000 +, Spindel 01, 250 UPM, 25 °C (DIN EN ISO 321). Das so entstandene erfindungsgemäße Compound liegt als rieselfähiges Pulver vor.

Der Celluloseether kann ein ionischer Celluloseether, wie Carboxymethylcellulose (CMC), Carboxymethylhydroxyethylcellulose (CMHEC), Carboxymethylhydroxypropylcellulose (CMHPC), Sulfoethylmethylhydroxyethylcellulose (SEMHEC), Sulfoethylmethylhydroxypropylcellulose (SEMHPC) oder nicht ionischer Celluloseether wie Hydroxyethylcellulose (HEC), Hydroxypropylcellulose (HPC), Methylcellulose (MC), Methylhydroxypropylcellulose (MHPC), Methylhydroxyethylcellulose (MHEC), Ethyl-hydroxyethylcellulose (EHEC) oder Methylethylhydroxyethylcellulose (MEHEC), sein.

Bei dem Entschäumer handelt es sich um eine Verbindung auf Basis von Oxyalkylen, Silikonöl, Alkohol, Mineralöl, Fettsäuren und Fettsäureester, bevorzugt sind Fettsäureester.

Einsatzgebiete des erfindungsgemäßen Compounds Celluloseether mit Entschäumer sind: Fliesenkleber auf Zementbasis, zur Verbesserung der offenen Zeit und Benetzung, Putze im Wärmedämmverbundsystem sowie Zementputze (Grundputze, Dekorputze, Einlagenputze) zur Verlängerung der Verarbeitungszeit.

Der Anteil an Celluloseether beträgt allgemein etwa 80 bis 99,5 Gew.-%, bevorzugt etwa 85 bis 98 Gew.-%, besonders bevorzugt etwa 90 bis 97 Gew.-%, jeweils bezogen auf das Gesamtgewicht des trockenen Compounds.

Der Entschäumer-Anteil beträgt etwa 0,5 bis 20 Gew.-%, bevorzugt etwa 2 bis 15 Gew.-%, besonders bevorzugt etwa 3 bis 10 Gew.-%, jeweils bezogen auf das Gesamtgewicht des trockenen Compounds.

Als wasserlöslich werden Celluloseether bezeichnet, wenn mindestens 2 g davon in einem Liter kaltem Wasser (20 °C) gelöst werden können.

### Bevorzugte Celluloseether sind:

Methylcellulose (MC) mit einem DS_{Methyl} von 1,4 bis 2,2, insbesondere mit einem DS_{methyl} von 1,6 bis 2,0; Methylhydroxypropylcellulose (MHPC) mit einem DS_{Methyl} von 1,2 bis 2,2 und einem MS_{Hydroxypropyl} von 0,1 bis 1,0, insbesondere mit einem DS_{Methyl} von 1,3 bis 2,0 und einem MS_{Hydroxypropyl} von 0,15 bis 0,7; Methylhydroxyethylcellulose (MHEC) mit einem DS_{Methyl} von 1,2 bis 2,2 und einem MS_{Hydroxyethyl} von 0,05 bis 0,4, insbesondere mit einem DS_{Methyl} von 1,4 bis 1,9 und einem MS_{Hydroxyethyl} von 0,1 bis 0,35; Hydroxyethylcellulose (HEC)mit einem MS_{Hydroxyethyl} von 1,2 bis 4,0, besonders bevorzugt mit einem MS_{Hydroyethyl} von 1,6 bis 3,5; Ethylhydroxyethylcellulose (EHEC) mit einem DS_{Ethyl} von 0,5 bis 1,5 und einem MS_{Hydroxyethyl} von 1,5 bis 3,5 und Methylethylhydroxyethylcellulose (MEHEC) mit einem DS_{Methyl} von 0,2 bis 2,0, einem DS_{Ethyl} von 0,05 bis 1,5 und einem MS_{Hydroxyethyl} von 0,2 bis 3,5. Carboxymethylcelluloseether (CMC) mit einem DS_{Carboxymethyl} von 0,4 bis 1,0, Carboxymethylhydroxyethylcelluloseether (CMHEC) mit einem DS_{Carboxymethyl} von 0,1 bis 1,0 und einem MS_{Hydroxyethyl} von von 0,8 bis 3,5, Carboxymethylhydroxypropylcelluloseether (CMHPC) mit einem DS_{Carboxymethyl} von 0,1 bis 1,0 und einem MS_{Hydroxpropyl} von 0,8 bis 3,3, Sulfoethylmethylhydroxyethylcelluloseether (SEMHEC) mit einem DS_{Sulfoethyl} von 0,005 bis 0,01, DS_{Methyl} von 0,2 bis 2,0, und einem MS_{Hydroxyethyl} von 0,1 bis 0,3, Sulfoethylmethylhydroxypropylcelluloseether (SEMHPC) mit einem DS_{Sulfoethyl} von 0,005 bis 0,01, DS_{Methyl} von 0,2 bis 2,0, und einem MS_{Hydroxpropyl} von 0,1 bis 0,3.

Der mittlere Polymerisationsgrad DPw der Celluloseether, gemessen nach Pulps - Determination of limiting viscosity number in cupriethylenediamine (CED) solution - nach ISO 5351, beträgt etwa 10 bis 5.000.

Die Viskosität der Celluloseether beträgt 1 bis 20.000 mPa s, bevorzugt 100 bis 15.000 mPa s, besonders bevorzugt 1000 bis 12.000 mPa s. Gemessen wird sie mit Brookfield RV, 20 UPM, in Wasser von 20 °C und 20° dH. Dabei wird je nach Viskosität mit unterschiedlichen Konzentrationen der Celluloseether gemessen: Viskosität < 150 mPa s: 4,75 Gew.-% absolut trocken (atro); Viskosität 150 bis 250 mPa s: 2,85 Gew.-% atro; Viskosität 250 bis 34000 mPa s: 1,9 % Gew.-% atro; Viskosität 4.000 bis 20000 mPa s: 1,0 % Gew.-% atro.

Die Entschäumer können auf Basis von Oxyalkylen, Silikon, Alkohol, Mineralöl, Fettsäuren, Fettalkoholalkoxylat und Fettsäureester sein. Bevorzugt sind Fettalkoholalkoxylat- und Fettsäureester-Entschäumer, besonders die einen Fettsäureester Anteil enthalten oder Mischungen dieser Bestandteile.

Die erfindungsgemäßen Celluloseether/Entschäumer-Compounds enthalten im Unterschied zu der EP 2 966 049 A1 kein natürliches Biopolymer. Sie enthalten auch keine quartären Ammoniumverbindungen, wie in der EP 2 190 800 B1 offenbart.

Die nachfolgenden Beispiele dienen zur Erläuterung der Erfindung. Prozente sind Gewichtsprozente, soweit nicht anders angegeben oder aus dem Zusammenhang ersichtlich, wobei "atro" für "absolut trocken" und "lutro" für "lufttrocken" steht. In den Beispielen wurden folgende Komponenten eingesetzt:

### Celluloseether (CE):

CE1: MHEC, DS 1,7, MS 0,2, Viskosität (1,9 % atro, 20 °C, 20 °dH, Brookfield RV 20 UPM, Spindel 6) 13000 mPa s
   Feinpulver (Luftstrahlsieb, < 0,125 mm: 95%, < 0,063 mm: 50%)
CE2: MHEC, DS 1,7, MS 0,2, Viskosität (1,9% atro, 20 °C, 20 °dH, Brookfield RV 20 UPM, Spindel 6) 25000 mPa s
   Feinpulver (Luftstrahlsieb, < 0,125 mm: 95%, < 0,063 mm: 50%)
CE3: MHEC, DS 1,7, MS 0,2, Viskosität (1,0% atro, 20 °C, 20 °dH, Brookfield RV 20 UPM, Spindel 5) 10000 mPa s,
   Feinstpulver (Luftstrahlsieb, < 0,100 mm: 95%, < 0,063 mm: 75%)
CE4: MHEC, DS 1,6, MS 0,3, Viskosität (1,9% atro, 20 °C, 20 °dH, Brookfield RV 20 UPM, Spindel 6) 25000 mPa s
   Feinpulver (Luftstrahlsieb, < 0,125 mm: 95%, < 0,063 mm: 50%)
CE5: MHPC, DS 1,7, MS 0,2, Viskosität (1,9% atro, 20 °C, 20 °dH, Brookfield RV 20 UPM, Spindel 6) 25000 mPa s
   Feinpulver (Luftstrahlsieb, < 0,125 mm: 95%, < 0,063 mm: 50%)

### Stärkeether:

SE1: Hydroxypropylstärke (HPS), MS 0,4, Viskosität (5% lutro, 20 °C, Wasser mit ca. 18 °dH, Brookfield RV, 100 UPM, Spindel 3) 150 - 300 mPas

### Modifizierung:

Die in dem erfindungsgemäßen Compound verwendeten CE sind bevorzugt modifizierte CE. Die Modifizierungsmittel sind üblicherweise Polyacrylamide (PAA). Die Polyacrylamide sind vorzugsweise anionische PAA mit einer Molmasse von über 10 Mio.

### Entschäumer:

E1: Fettsäureester, Dichte bei 20°C: 900 kg/m³ ± 100 kg/m³; dyn. Viskosität bei 25°C: 80 mPa s ± 30 mPa s; Säurezahl: 35 mg KOH/g ± 10 mg KOH/g; flüssig
E2: 50 Gew.-% E1 auf anorganischem Träger; Pulver
E3: Fettalkoholalkoxylat, Dichte bei 20°C: 950 kg/m³ ± 50 kg/m³, Viskosität bei 25°C: 115 mPa s ± 10 mPas; flüssig

### Prüfprodukte

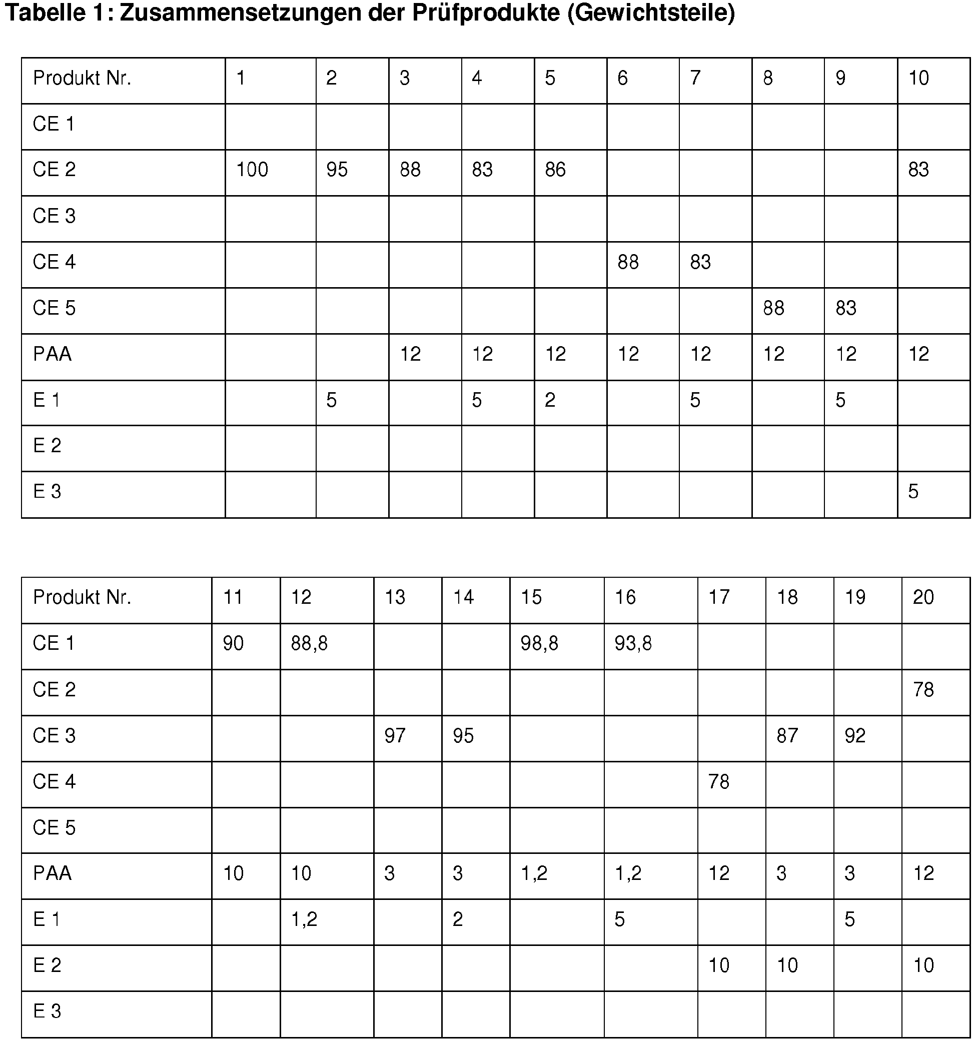

### Vergleichsprodukte, Marktprodukte, die für die Anwendung empfohlen werden

### Hersteller: Dow Chemical Company

®Methocel 327: MHPC, modifiziert, Brookfield Viskosität 2% in Wasser bei 20°C und 20 UPM: 22000 mPa s, Feinheit < 212 µm: min 95%
®Walocel MKX 45000 PF 20 L: MHEC, modifiziert, Haake ®Rotovisko RV 100 Viskosität 2% in Wasser bei 20°C und Scherrate 2,55 1/s: 45000 mPa s
®Walocel Xact 13-70-E: MHEC, modifiziert, Haake Rotovisko RV 100 Viskosität 2% in Wasser bei 20°C und Scherrate 2,55 1/s: 13000 mPa s
®Walocel Xact 12-01-E: MHEC, nicht modifiziert, Haake Rotovisko RV 100 Viskosität 2% in Wasser bei 20°C und Scherrate 2,55 1/s: 12000 mPa s

### Hersteller: Ashland

®Culminal MHPC 20000 S: MHPC, nicht modifiziert, Brookfield RVT Viskosität abs. trocken, 2% in Wasser bei 20°C und 20 UPM: 15000 mPa s
®Culminal Plus 2060 PF: MHEC, modifiziert, Brookfield RVT Viskosität abs. trocken, 2% in Wasser bei 20°C und 20 UPM: 20000 mPa s

### Prüfrezepturen

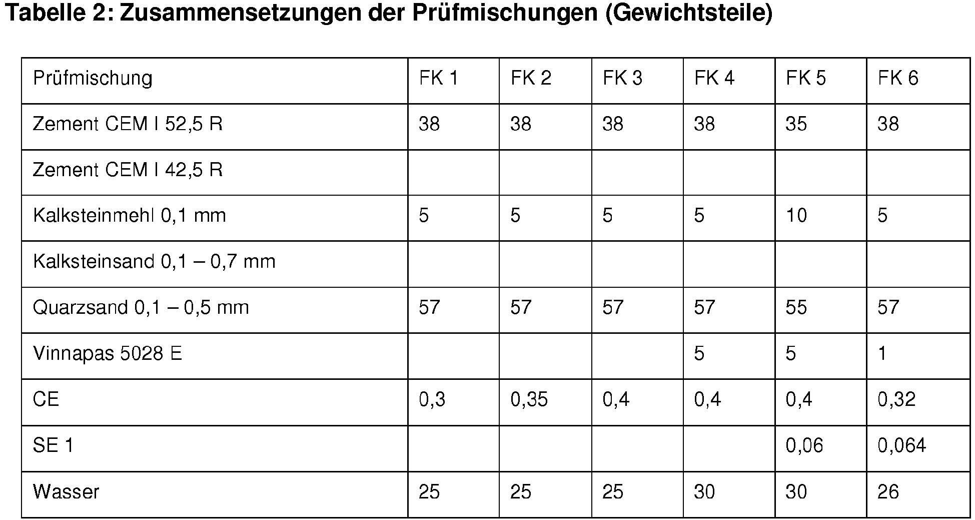

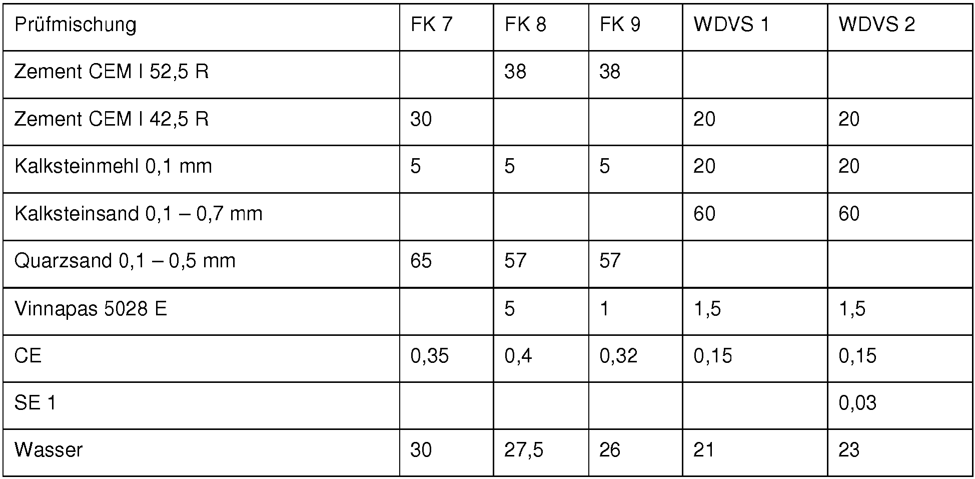

### Prüfmethoden für Fliesenkleber

Offene Zeit nach ISO 13007 und DIN EN 1346.

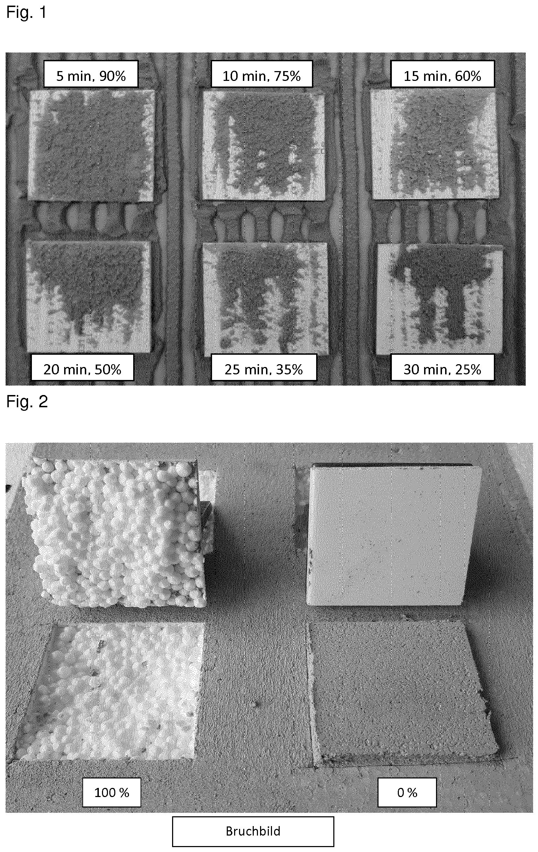

Die Benetzung wurde gemessen, indem in das Mörtelbett (appliziert nach ISO 13007) alle 5 Minuten eine Steingutfliese (5 X 5 cm) eingelegt, 30 Sekunden lang mit 2 kg belastet und dann aus dem Mörtelbett aufgenommen wurde. Die Benetzung der Rückseite der Fliese wurde in % angegeben. Fig. 1 verdeutlicht wie die Benetzung gemessen wurde.

### Prüfmethoden für WDVS

Die Benetzung wurde gemessen, indem auf eine Platte aus expandiertem Polystyrol (EPS) ein Mörtelbett mit einer Dicke von 0,5 cm aufgebracht und alle 5 Minuten eine glasierte Steingutfliese (5 X 5 cm²) mit der glasierten Seite in das Mörtelbett eingelegt wurde, 30 Sekunden lang mit 0,5 kg belastet und dann aus dem Mörtelbett aufgenommen wurde. Die Benetzung der Rückseite der Fliese ist in % angegeben.

Die Haftung wurde gemessen, indem auf eine EPS-Platte ein Mörtelbett mit einer Dicke von 0,5 cm aufgebracht und nach 30 Minuten alle 10 Minuten eine glasierte Steingutfliese (5 X 5 cm²) mit der glasierten Seite in das Mörtelbett eingelegt und 30 Sekunden lang mit 0,5 kg belastet wurde. Nach 7 Tagen wurde die Haftzugfestigkeit bestimmt. Es ist die Haftzugfestigkeit in N/mm² und das Bruchbild in % angegeben. Fig. 2 verdeutlicht wie Haftung und Ausriss zu bewerten sind.

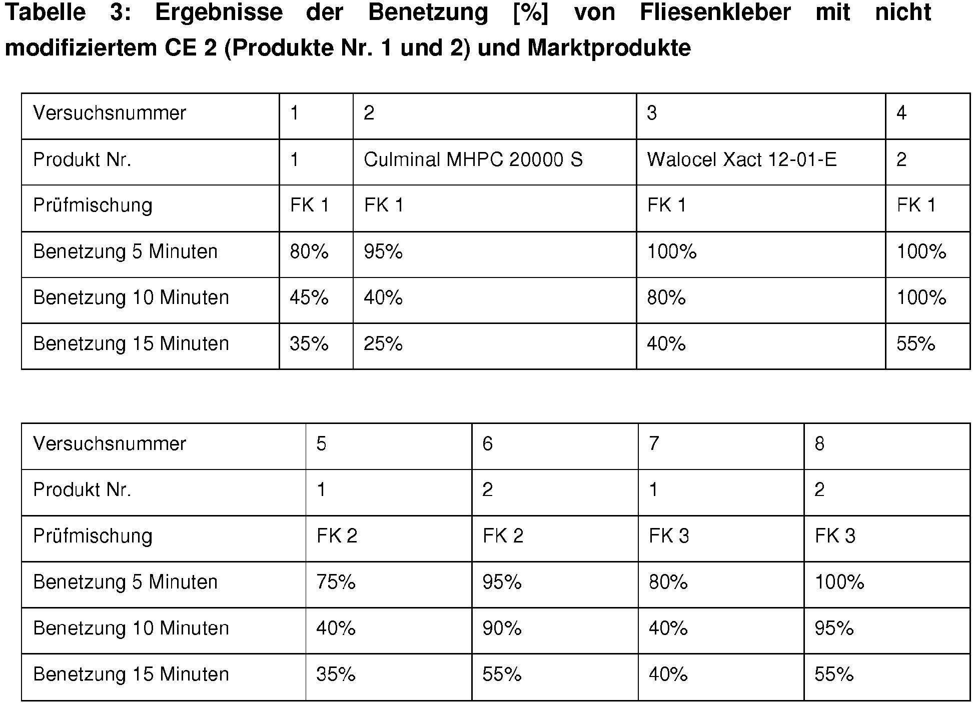

Das Vergleichsprodukt Produkt Nr. 1 zeigte nach 5 Minuten eine Benetzung von ca 80%, nach 10 Minuten von ca. 40% (Versuche Nr. 1, 5 und 7).

Das Wettbewerbs-Produkt ®Culminal MHPC 20000 S zeigte nach 5 Minuten eine Benetzung von 95%, nach 10 Minuten ca. 40% (Versuch Nr. 2) und ®Walocel Xact 12-01-E zeigte nach 5 Minuten eine Benetzung von 100%, nach 10 Minuten von 80% (Versuch Nr. 3).

Überraschend zeigte das erfindungsgemäße Produkt Nr. 2 deutlich höhere Benetzung. Es zeigte nach 5 Minuten eine Benetzung von praktisch 100%, nach 10 Minuten ca. 95% (Versuche Nr. 4, 6 und 8).

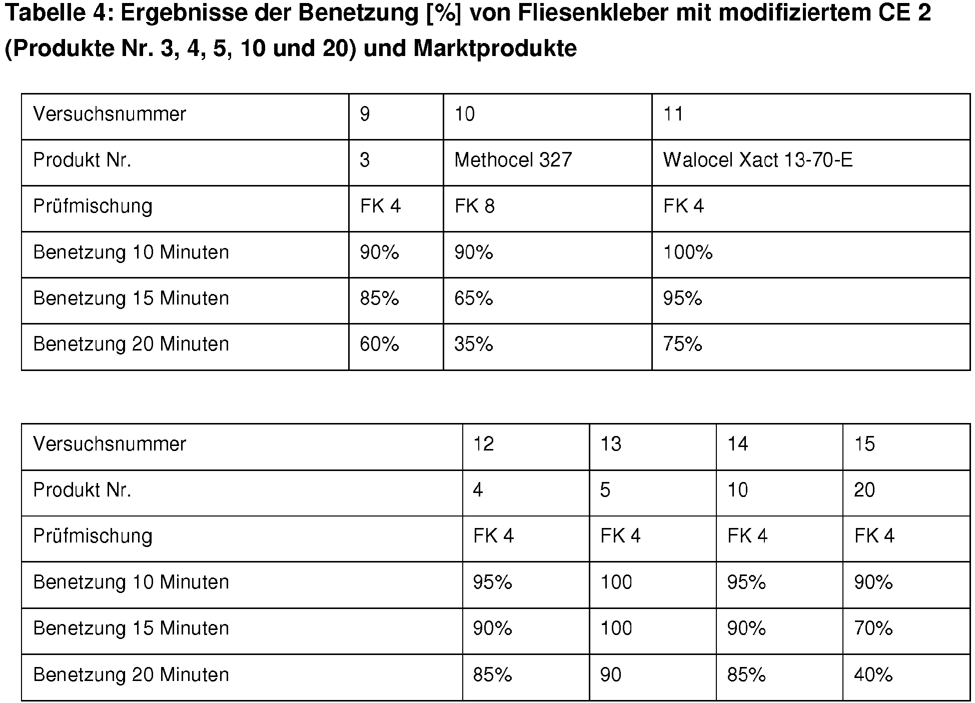

Produkt Nr. 3 zeigte nach 15 Minuten eine Benetzung von 85%, nach 20 Minuten 60% (Versuch Nr. 9).

Das Vergleichs-Produkt Nr.20 zeigte nach 15 Minuten eine Benetzung von 70%, nach 20 Minuten 40% (Versuch Nr. 15).

Das Marktprodukt ®Methocel 327 zeigte nach 15 Minuten eine Benetzung von 65%, nach 20 Minuten 35% (Versuch Nr. 10) und ®Walocel Xact 13-70-E zeigt nach 15 Minuten eine Benetzung von 95%, nach 20 Minuten 75% (Versuch Nr. 11).

Überraschend zeigten die erfindungsgemäßen Produkte Nr. 4, Nr. 5 und Nr. 10 höhere Benetzung.

Produkt Nr. 4 zeigte nach 15 Minuten eine Benetzung von 90%, nach 20 Minuten von 85% (Versuch Nr. 12); Produkt Nr. 5 zeigte nach 15 Minuten eine Benetzung von 100%, nach 20 Minuten 90% (Versuch Nr. 13) und Produkt Nr. 10 zeigte nach 15 Minuten eine Benetzung von 90%, nach 20 Minuten 85% (Versuch Nr. 14).

### Tabelle 5: Ergebnisse der Benetzung [%] von Fliesenkleber mit modifiziertem CE 1 (Produkte Nr. 3, 4, 5, 9 und 16)

| Versuchsnummer | 16 | 17 |
|---|---|---|
| Produkt Nr. | 11 | 12 |
| Prüfmischung | FK 5 | FK 5 |
| Benetzung 10 Minuten | 90% | 90% |
| Benetzung 15 Minuten | 80% | 90% |
| Benetzung 20 Minuten | 70% | 80% |
| Benetzung 25 Minuten | 60% | 80% |
| Benetzung 30 Minuten | 50% | 70% |

Produkt Nr. 11 zeigte nach 25 Minuten eine Benetzung von 60%, nach 30 Minuten 50% (Versuch Nr. 16).

Überraschend zeigte das erfindungsgemäße Produkt Nr. 12 deutlich höhere Benetzung. Es zeigte nach 25 Minuten eine Benetzung von 80%, nach 30 Minuten von 70% (Versuch Nr. 17).

### Tabelle 6: Ergebnisse der Benetzung [%] von Fliesenkleber mit modifiziertem CE 3 (Produkte Nr. 3, 4, 5, 9 und 16) und Marktprodukte

| Versuchsnummer | 18 | 19 | 20 | 21 | 22 |
|---|---|---|---|---|---|
| Produkt Nr. | 13 | Culminal Plus 2060 PF | Walocel MKX 45000 PF 20 L | 14 | 18 |
| Prüfmischung | FK 6 | FK 9 | FK 9 | FK 6 | FK 6 |
| Benetzung 10 Minuten | 80% | 100% | 85% | 100% | 80% |
| Benetzung 15 Minuten | 70% | 95% | 75% | 100% | 70% |
| Benetzung 20 Minuten | 30% | 75% | 65% | 90% | 40% |
| Benetzung 25 Minuten | 10% | 70% | 35% | 85% | 30% |

Das Vergleichs-Produkt Nr. 13 zeigte nach 15 Minuten eine Benetzung von 70%, nach 20 Minuten 30% (Versuch Nr. 18).

Das Vergleichsprodukt Nr. 18 zeigte nach 15 Minuten eine Benetzung von 70%, nach 20 Minuten von 40% (Versuch Nr. 22), vergleichsweise die gleichen Ergebnisse wie Vergleichs-Produkt Nr. 13.

Die Marktprodukt ®Culminal Plus 2060 PF zeigte nach 15 Minuten eine Benetzung von 95%, nach 20 Minuten 75% (Versuch Nr. 19) und ®Walocel MKX 45000 PF 20 L zeigte nach 15 Minuten eine Benetzung von 75%, nach 20 Minuten 65% (Versuch Nr. 20).

Überraschend zeigte das erfindungsgemäße Produkt Nr.14 deutlich höhere Benetzung. Es zeigte nach 15 Minuten eine Benetzung von 100%, nach 20 Minuten von 90% (Versuch Nr. 21).

### Tabelle 7: Ergebnisse der Benetzung [%] von Fliesenkleber mit Produkt Nr. 6 - 9

| Versuchsnummer | 23 | 24 | 25 | 26 |
|---|---|---|---|---|
| Produkt Nr. | 6 | 7 | 8 | 9 |
| Prüfmischung | FK 4 | FK 4 | FK 4 | FK 4 |
| Benetzung 10 Minuten | 95% | 100% | 100% | 100% |
| Benetzung 15 Minuten | 90% | 95% | 90% | 100% |
| Benetzung 20 Minuten | 70% | 85% | 75% | 90% |

Das Vergleichsprodukt Nr.6 zeigte nach 15 Minuten eine Benetzung von 90%, nach 20 Minuten von 70% (Versuch Nr. 23).

Überraschend zeigte das erfindungsgemäße Produkt Nr. 7 deutlich höhere Benetzung. Es zeigte nach 15 Minuten eine Benetzung von 95%, nach 20 Minuten von 85% (Versuch Nr. 24).

Das Vergleichs-Produkt Nr. 8 zeigte nach 15 Minuten eine Benetzung von 90%, nach 20 Minuten von 75% (Versuch Nr. 25).

Überraschend zeigte das erfindungsgemäße Produkt Nr. 9 deutlich höhere Benetzung. Es zeigte nach 15 Minuten eine Benetzung von 100%, nach 20 Minuten von 90% (Versuch Nr. 26).

### Tabelle 8: Ergebnisse der offenen Zeit nach EN 1346 [N/mm²] von Fliesenkleber mit modifiziertem CE 2 (Produkte Nr. 3, 4, 10 und 20)

| Versuchsnummer | 27 | 28 | 29 | 30 |
|---|---|---|---|---|
| Produkt Nr. | 3 | 4 | 10 | 20 |
| Entschäumer | | 5% E1 | 5% E3 | 1 0% E2 |
| Prüfmischung | FK 4 | FK 4 | FK 4 | FK 4 |
| Haftzugfestigkeit nach 20 Minuten | 1,38 N/mm² | 1,69 N/mm² | 1,92 N/mm² | 1,11 N/mm² |
| Haftzugfestigkeit nach 30 Minuten | 0,87 N/mm² | 1,34 N/mm² | 1,29 N/mm² | 0,70 N/mm² |

Das Vergleichs-Produkt Nr. 3 zeigte Haftzugfestigkeit nach 20 Minuten von 1,38 N/mm², nach 30 Minuten von 0,87 N/mm² (Versuch Nr. 27).

Das Vergleichs-Produkt Nr. 20 zeigte Haftzugfestigkeit nach 20 Minuten von 1,11 N/mm², nach 30 Minuten von 0,70 N/mm² (Versuch Nr. 30).

Überraschend zeigten die erfindungsgemäßen Produkte Nr. 4 und Nr. 10 höhere Haftzugfestigkeiten.

Produkt Nr. 4 zeigte nach 20 Minuten 1,69 N/mm², nach 30 Minuten 1,38 N/mm² (Versuch Nr. 28).

Produkt Nr. 10 zeigte nach 20 Minuten 1,92 N/mm², nach 30 Minuten 1,29 N/mm² (Versuch Nr. 29).

Die erfindungsgemäßen Produkte Nr. 4 und Nr. 10 zeigten höhere Haftzugfestigkeiten von 20 - 80%.

### Tabelle 9: Ergebnisse der offenen Zeit nach EN 1346 [N/mm²] von Fliesenkleber mit modifiziertem CE 3 (Produkte Nr. 13, 19 und 20)

| Versuchsnummer | 31 | 32 | 33 |
|---|---|---|---|
| Produkt Nr. | 13 | 19 | 20 |
| Prüfmischung | FK 6 | FK 6 | FK 9 |
| Haftzugfestigkeit nach 20 Minuten | 0,59 N/mm² | 0,66 N/mm² | 0,46 N/mm² |
| Haftzugfestigkeit nach 30 Minuten | 0,17 N/mm² | 0,51 N/mm² | 0,23 N/mm² |

Die Versuche Nr. 31 und 33 zeigen, dass die offene Zeit mit den Vergleichs-Produkten Nr. 13 und Nr. 20 vergleichbar waren und ähnliche Haftzugfestigkeiten nach 30 Minuten 0,17 N/mm² bzw. 0,23 N/mm² erreicht wurden.

Überraschend zeigte sich, dass das erfindungsgemäße Produkt Nr. 19 (Versuch Nr. 32) deutlich höhere Haftzugfestigkeit aufwies, nach 30 Minuten 0,51 N/mm², zwei- bis dreimal höher als die Vergleichs-Produkte.

### Tabelle 10: Ergebnisse der Benetzung [%] von WDVS Putzen mit modifiziertem CE 1 (Produkte Nr. 15 und 16)

| Versuchsnummer | 34 | 35 |
|---|---|---|
| Produkt Nr. | 15 | 16 |
| Prüfmischung | WDVS1 | WDVS1 |
| Benetzung 15 Minuten | 100% | 100% |
| Benetzung 20 Minuten | 70% | 85% |
| Benetzung 25 Minuten | 10% | 30% |
| Benetzung 30 Minuten | 0% | 20% |

Das Vergleichs-Produkt Nr. 15 zeigte nach 25 Minuten eine Benetzung von 10%, nach 30 Minuten 0% (Versuch Nr. 34).

Überraschend zeigte das erfindungsgemäße Produkt Nr. 16 deutlich höhere Benetzung. Es zeigte nach 25 Minuten eine Benetzung von 30%, nach 30 Minuten von 20% (Versuch Nr. 35).

### Tabelle 11: Ergebnisse der Benetzung [%] von WDVS Putzen mit modifiziertem CE 3 (Produkte Nr. 13 und 19)

| Versuchsnummer | 36 | 37 |
|---|---|---|
| Produkt Nr. | 13 | 19 |
| Prüfmischung | WDVS2 | WDVS2 |
| Benetzung 20 Minuten | 100% | 100% |
| Benetzung 25 Minuten | 90% | 100% |
| Benetzung 30 Minuten | 50% | 100% |

Das Vergleichs-Produkt Nr. 13 zeigte nach 25 Minuten eine Benetzung von 90%, nach 30 Minuten von 50% (Versuch Nr. 36).

Überraschend zeigte das erfindungsgemäße Produkt Nr. 19 deutlich höhere Benetzung. Es zeigte nach 25 Minuten eine Benetzung von 100%, nach 30 Minuten ebenso 100% (Versuch Nr. 37).

### Tabelle 12: Ergebnisse der Haftzugfestigkeit [N/mm²] von WDVS Putzen mit modifiziertem CE 3 (Produkte Nr. 13 und 19)

| Versuchsnummer | 38 | 39 |
|---|---|---|
| Celluloseether | 13 | 19 |
| Prüfmischung | WDVS2 | WDVS2 |
| nach 30 Minuten | 0,12 N/mm² 1 00% EPS Ausriss | 0,09 N/mm² 100% EPS Ausriss |
| nach 40 Minuten | 0,06 N/mm² 0% EPS Ausriss | 0,11 N/mm² 100% EPS Ausriss |
| nach 50 Minuten | 0 N/mm² 0% EPS Ausriss | 0,09 N/mm² 100% EPS Ausriss |

Das Vergleichs-Produkt Nr. 13 zeigte nach 40 Minuten eine Haftzugfestigkeiten von 0,06 N/mm² und 0% EPS Ausriss, nach 50 Minuten keine Haftzugfestigkeit und keinen EPS Ausriss (Versuch Nr. 38).

Das erfindungsgemäße Produkt Nr. 19 zeigte nach 40 Minuten eine Haftzugfestigkeit von 0,11 N/mm² und 100% EPS Ausriss, nach 50 Minuten eine Haftzugfestigkeiten von 0,09 N/mm² und 100% EPS Ausriss (Versuch Nr. 39). Es war deutlich länger verarbeitbar.

## Patentansprüche

1. Verwendung von Celluloseethern, die mit einem oder mehreren flüssigen Entschäumern abgemischt sind, zur Verlängerung der offenen Zeit von zementären Fliesenklebern und zur Verbesserung der Benetzung von Fliesen mit den zementären Fliesenklebern sowie zur Verlängerung der Verarbeitungszeit von Zementputzen sowie von zementären Putzen in Wärmedämmverbundsystemen.

2. Verwendung gemäß Anspruch 1, **dadurch gekennzeichnet, dass** der flüssige Entschäumer auf den Celluloseether aufgesprüht oder eingeknetet ist, bevorzugt eingeknetet.

3. Verwendung gemäß Anspruch 1 oder 2, **dadurch gekennzeichnet, dass** der Celluloseether Hydroxyethylcellulose (HEC), Hydroxypropylcellulose (HPC), Methylcellulose (MC), Methylhydroxypropylcellulose (MHPC), Methylhydroxyethylcellulose (MHEC), Ethylhydroxyethylcellulose (EHEC) oder Methylethylhydroxyethylcellulose (MEHEC), Carboxymethylcellulose (CMC), Carboxymethylhydroxyethylcellulose (CMHEC), Carboxymethylhydroxypropylcellulose (CMHPC), Sulfoethylmethyl-hydroxyethylcellulose (SEMHEC), Sulfoethylmethylhydroxypropylcellulose (SEMHPC) ist.

4. Verwendung gemäß einem oder mehreren der Ansprüche 1 bis 3, **dadurch gekennzeichnet, dass** die Methylcellulose (MC) einen DS_{Methyl} von 1,4 bis 2,2, insbesondere von 1,6 bis 2,0 aufweist; die Methylhydroxypropylcellulose (MHPC) einen DS_{Methyl} von 1,2 bis 2,2 und einem MS_{Hydroxypropyl} von 0,1 bis 1,0, insbesondere einen DS_{Methyl} von 1,3 bis 2,0 und einen MS_{Hydroxypropyl} von 0,15 bis 0,7 aufweist; die Methyl-hydroxyethylcellulose (MHEC) einen DS_{Methyl} von 1,2 bis 2,2 und einen MS_{Hydroxyethyl} von 0,05 bis 0,4, insbesondere mit einem DS_{Methyl} von 1,4 bis 1,9 und einem MS_{Hydroxyethyl} von 0,1 bis 0,35 aufweist; die Hydroxyethylcellulose (HEC) einen MS_{Hydroxyethyl} von 1,2 bis 4,0, besonders bevorzugt einen MS_{Hydroxyethyl} von 1,6 bis 3,5 aufweist; die Ethyl-hydroxyethylcellulose (EHEC) einen DS_{Ethyl} von 0,5 bis 1,5 und einen MS_{Hydroxyethyl} von 1,5 bis 3,5 aufweist; die Methylethylhydroxyethylcellulose (MEHEC) einen DS_{Methyl} von 0,2 bis 2,0, einen DS_{Ethyl} von 0,05 bis 1,5 und einen MS_{Hydroxyethyl} von 0,2 bis 3,5 aufweist; die Carboxymethylcellulose (CMC) einen DS_{Carboxymethyl} von 0,4 bis 1,0 aufweist; die Carboxymethylhydroxyethylcellulose (CMHEC) einen DS_{Carboxymethyl} von 0,1 bis 1,0 und einen MS_{Hydroxyethyl} von 0,8 bis 3,5 aufweist; die Carboxymethyl-hydroxypropylcellulose (CMHPC) einen DS_{Carboxymethyl} von 0,1 bis 1,0 und einen MS_{Hydroxpropyl} von 0,8 bis 3,3 aufweist; die Sulfoethylmethylhydroxyethylcellulose (SEMHEC) einen DS_{Sulfoethyl} von 0,005 bis 0,01, einen DS_{Methyl} von 0,2 bis 2,0, und einem MS_{Hydroxyethyl} von 0,1 bis 0,3 aufweist; oder die Sulfoethylmethylhydroxypropyl-cellulose (SEMHPC) einen DS_{Sulfoethyl} von 0,005 bis 0,01, einen DS_{Methyl} von 0,2 bis 2,0, und einen MS_{Hydroxpropyl} von 0,1 bis 0,3 aufweist.

5. Verwendung gemäß einem oder mehreren der Ansprüche 1 bis 4, **dadurch gekennzeichnet, dass** der Celluloseether einen mittleren Polymerisationsgrad DPw von 10 bis 5.000 aufweist.

6. Verwendung gemäß einem oder mehreren der Ansprüche 1 bis 5, **dadurch gekennzeichnet, dass** die Viskosität des Celluloseethers 1 bis 20.000 mPa s, bevorzugt 100 bis 15.000 mPa s, besonders bevorzugt 1000 bis 12.000 mPa s, beträgt, gemessen mit Brookfield RV, 20 UPM, in Wasser von 20 °C und 20° dH, wobei die Viskosität mit unterschiedlichen Konzentrationen der Celluloseether gemessen: Viskosität < 150 mPa s: 4,75 Gew.-% absolut trocken (atro); Viskosität 150 bis 250 mPa s: 2,85 Gew.-% atro; Viskosität 250 bis 34000 mPa s: 1,9 % Gew.-% atro; Viskosität 4.000 bis 20000 mPa s: 1,0 % Gew.-% atro.

7. Verwendung gemäß einem oder mehreren der Ansprüche 1 bis 6, **dadurch gekennzeichnet, dass** der Celluloseether eine Feuchte von 0 bis 15 Gew. %, bevorzugt 1 bis 10 Gew.-%, aufweist.

8. Verwendung gemäß einem oder mehreren der Ansprüche 1 bis 7, **dadurch gekennzeichnet, dass** das Compound in Pulverform vorliegt, wobei 100% der Partikel kleiner als 1000 µm sind, bevorzugt 100% kleiner als 300 µm, gemessen mit einem Luftstrahlsieb.

9. Verwendung gemäß einem oder mehreren der Ansprüche 1 bis 8, **dadurch gekennzeichnet, dass** der flüssige Entschäumer eine Verbindung auf Basis von Oxyalkylen, auf Basis Silikon, Alkohol, Mineralöl, auf Basis Fettsäuren, Fettalkoholalkoxylat und Fettsäureester oder eine Kombination davon ist, wobei Fettalkoholalkoxylate und Fettsäureester sowie Kombinationen davon bevorzugt sind.

10. Verwendung gemäß einem oder mehreren der Ansprüche 1 bis 9,
**dadurch gekennzeichnet, dass** das
Compound zusätzlich mindestens ein nicht-ionisches, anionisches oder kationisches Polyacrylamid (PAA) enthält, bevorzugt mit einer Molmasse von über 5 Mio. und einer Partikelgröße von weniger als 1 mm.

11. Verwendung gemäß einem oder mehreren der Ansprüche 1 bis 10, **dadurch gekennzeichnet, dass** der mindestens eine flüssige Entschäumer in dem Compound in einem Anteil von 0,5 bis 15 Gew. %, bevorzugt von 0,7 bis 10 Gew. %, besonders bevorzugt von 1,0 bis 6 Gew. %, jeweils bezogen auf das Gesamtgewicht des trockenen Compounds, enthalten ist.

12. Verwendung gemäß einem oder mehreren der Ansprüche 1 bis 11, **dadurch gekennzeichnet, dass** das Compound in einem Trockenmörtel in einem Anteil von 0,02 bis 1 Gew.-%, bevorzugt von 0,05 bis 0,7 Gew. %, jeweils bezogen auf das Gesamtgewicht des Trockenmörtels, eingesetzt wird.

## Claims

1. Use of cellulose ethers which are blended with one or more liquid antifoams for increasing the open time of cement-based tile adhesives and for improving the wetting of tiles with the cement-based tile adhesives and also for increasing the processing time of cement renders and of cement-based renders in composite thermal insulation systems.

2. Use according to Claim 1, **characterized in that** the liquid antifoam is sprayed onto or kneaded into, preferably kneaded into, the cellulose ether.

3. Use according to Claim 1 or 2, **characterized in that** the cellulose ether is hydroxyethyl cellulose (HEC), hydroxypropyl cellulose (HPC), methyl cellulose (MC), methyl hydroxypropyl cellulose (MHPC), methyl hydroxyethyl cellulose (MHEC), ethyl hydroxyethyl cellulose (EHEC) or methyl ethyl hydroxyethyl cellulose (MEHEC), carboxymethyl cellulose (CMC), carboxymethyl hydroxyethyl cellulose (CMHEC), carboxymethyl hydroxypropyl cellulose (CMHPC), sulfoethyl methyl hydroxyethyl cellulose (SEMHEC), sulfoethyl methyl hydroxypropyl cellulose (SEMHPC).

4. Use according to one or more of Claims 1 to 3, **characterized in that** the methyl cellulose (MC) has a DS_{methyl} of from 1.4 to 2.2, in particular from 1.6 to 2.0; the methyl hydroxypropyl cellulose (MHPC) has a DS_{methyl} of from 1.2 to 2.2 and an MS_{hydroxypropyl} of from 0.1 to 1.0, in particular a DS_{methyl} of from 1.3 to 2.0 and an MS_{hydroxypropyl} of from 0.15 to 0.7; the methyl hydroxyethyl cellulose (MHEC) has a DS_{methyl} of from 1.2 to 2.2 and an MS_{hydroxyethyl} of from 0.05 to 0.4, in particular with a DS_{methyl} of from 1.4 to 1.9 and an MS_{hydroxyethyl} of from 0.1 to 0.35; the hydroxyethyl cellulose (HEC) has an MS_{hydroxyethyl} of from 1.2 to 4.0, particularly preferably an MS_{hydroxyethyl} of from 1.6 to 3.5; the ethyl hydroxyethyl cellulose (EHEC) has a DS_{ethyl} of from 0.5 to 1.5 and an MS_{hydroxyethyl} of from 1.5 to 3.5; the methyl ethyl hydroxyethyl cellulose (MEHEC) has a DS_{methyl} of from 0.2 to 2.0, a DS_{ethyl} of from 0.05 to 1.5 and an MS_{hydroxyethyl} of from 0.2 to 3.5; the carboxymethyl cellulose (CMC) has a DS_{carboxymethyl} of from 0.4 to 1.0; the carboxymethyl hydroxyethyl cellulose (CMHEC) has a DS_{carboxymethyl} of from 0.1 to 1.0 and an MS_{hydroxyethyl} of from 0.8 to 3.5; the carboxymethyl hydroxypropyl cellulose (CMHPC) has a DS_{carboxymethyl} of from 0.1 to 1.0 and an MS_{hydroxypropyl} of from 0.8 to 3.3; the sulfoethyl methyl hydroxyethyl cellulose (SEMHEC) has a DS_{sulfoethyl} of from 0.005 to 0.01, a DS_{methyl} of from 0.2 to 2.0 and an MS_{hydroxyethyl} of from 0.1 to 0.3; or the sulfoethyl methyl hydroxypropyl cellulose (SEMHPC) has a DS_{sulfoethyl} of from 0.005 to 0.01, a DS_{methyl} of from 0.2 to 2.0 and an MS_{hydroxypropyl} of from 0.1 to 0.3.

5. Use according to one or more of Claims 1 to 4, **characterized in that** the cellulose ether has an average degree of polymerization DPw of from 10 to 5000.

6. Use according to one or more of Claims 1 to 5, **characterized in that** the viscosity of the cellulose ether is from 1 to 20 000 mPa s, preferably from 100 to 15 000 mPa s, particularly preferably from 1000 to 12 000 mPa s, measured using a Brookfield RV, 20 rpm, in water of 20 C and 20 dH, where the viscosity is measured at different concentrations of the cellulose ethers: viscosity < 150 mPa s: 4.75 % by weight absolutely dry (atro); viscosity from 150 to 250 mPa s: 2.85 % by weight atro; viscosity from 250 to 34 000 mPa s: 1.9 % by weight atro; viscosity from 4000 to 20 000 mPa s: 1.0 % by weight atro.

7. Use according to one or more of Claims 1 to 6, **characterized in that** the cellulose ether has a moisture content of from 0 to 15 % by weight, preferably from 1 to 10 % by weight.

8. Use according to one or more of Claims 1 to 7, **characterized in that** the compound is present in powder form, where 100 % of the particles are smaller than 1000 µm, preferably 100 % smaller than 300 µm, measured using an air jet sieve.

9. Use according to one or more of Claims 1 to 8, **characterized in that** the liquid antifoam is a compound based on oxyalkylene, based on silicone, alcohol, mineral oil, based on fatty acids, fatty alcohol alkoxylate and fatty acid esters or a combination thereof, with preference being given to fatty alcohol alkoxylates and fatty acid esters and combinations thereof.

10. Use according to one or more of Claims 1 to 9, **characterized in that** the compound additionally contains at least one nonionic, anionic or cationic polyacrylamide (PAA), preferably having a molar mass of more than 5 million and a particle size of less than 1 mm.

11. Use according to one or more of Claims 1 to 10, **characterized in that** the at least one liquid antifoam is present in the compound in a proportion of from 0.5 to 15 % by weight, preferably from 0.7 to 10 % by weight, particularly preferably from 1.0 to 6 % by weight, in each case based on the total weight of the dry compound.

12. Use according to one or more of Claims 1 to 11, **characterized in that** the compound is used in a dry mortar in a proportion of from 0.02 to 1 % by weight, preferably from 0.05 to 0.7 % by weight, in each case based on the total weight of the dry mortar.

## Revendications

1. Utilisation d'éthers de cellulose, qui sont mélangés à un ou plusieurs agents antimoussants, pour allonger le temps ouvert d'adhésifs de carreaux à base de ciment et pour améliorer le mouillage des carreaux avec les adhésifs de carreaux, ainsi que pour allonger le temps de traitement de nettoyage du ciment, ainsi que le nettoyage des éléments à base de ciment dans des systèmes composites d'isolation thermique.

2. Utilisation selon la revendication 1, **caractérisée en ce que** l'agent antimoussant liquide est pulvérisé ou malaxé sur l'éther de cellulose, de préférence malaxé.

3. Utilisation selon la revendication 1 ou 2, **caractérisée en ce que** l'éther de cellulose hydroxyéthylcellulose (HEC) est de l'hydroxypropylcellulose (HPC), de la méthylcellulose (MC), de la méthylhydroxypropylcellulose (MHPC), de la méthylhydroxyéthylcellulose (MHEC), de l'éthylhydroxyéthylcellulose (EHEC) ou de la méthyléthylhydroxyéthylcellulose (MEHEC), de la carboxyméthylcellulose (CMC), de la carboxyméthylhydroxyéthylcellulose (CMHEC), de la carboxyméthylhydroxypropylcellulose (CMHPC), de la sulfoéthylméthylhydroxyéthylcellulose (SEMHEC), de la sulfoéthylméthylhydroxypropylcellulose (SEMHPC).

4. Utilisation selon l'une ou plusieurs quelconques des revendications 1 à 3, **caractérisée en ce que** la méthylcellulose (MC) présente un DS_{méthyle} allant de 1,4 à 2,2, en particulier de 1,6 à 2,0; la méthylhydroxypropylcellulose (MHPC) présente un DS_{méthyle} allant de 1,2 à 2,2 et une MS_{hydroxypropyle} allant de 0,1 à 1,0, en particulier un DS_{méthyle} allant de 1,3 à 2,0 et une MS_{hydroxypropyle} allant de 0,15 à 0,7; la méthylhydroxyéthylcellulose (MHEC) présente un DS_{méthyle} allant de 1,2 à 2,2 et une MS_{hydroxyéthyle} allant de 0,05 à 0,4, en particulier avec un DS_{méthyle} allant de 1,4 à 1,9 et une MSh_{ydroxyéthyle} allant de 0,1 à 0,35 ; l'hydroxyéthylcellulose (HEC) présente une MS_{hydroxyéthyle} allant de 1,2 à 4,0, de manière particulièrement préférée une MS_{hydroxyéthyle} allant de 1,6 à 3,5 ; l'éthylhydroxyéthylcellulose (EHEC) présente un DS_{éthyle} allant de 0,5 à 1,5 et une MS_{hydroxyéthyle} allant de 1,5 à 3,5; la méthyléthylhydroxyéthylcellulose (MEHEC) présente un DS_{méthyle} allant de 0,2 à 2,0, un DS_{éthyle} allant de 0,05 à 1,5 et une MS_{hydroxyéthyle} allant de 0,2 à 3,5 ; la carboxyméthylcellulose (CMC) présente un DS_{carboxyméthyle} allant de 0,4 à 1,0 ; la carboxyméthylhydroxyéthylcellulose (CMHEC) présente un DS_{carboxyméthyle} allant de 0,1 à 1,0 et une MS_{hydroxyéthyle} allant de 0,8 à 3,5 ; la carboxyméthylhydroxypropylcellulose (CMHPC) présente un DS_{carboxyméthyle} allant de 0,1 à 1,0 et une MS_{hydroxypropyle} allant de 0,8 à 3,3 ; la sulfoéthylméthylhydroxyéthylcellulose (SEMHEC) présente un DS_{sulfoéthyle} allant de 0,005 à 0,01, un DS_{méthyle} allant de 0,2 à 2,0 et une MS_{hydroxyéthyle} allant de 0,1 à 0,3 ; ou de la sulfoéthylméthylhydroxypropylcellulose (SEMHPC) présente un DS_{sulfoéthyle} allant de 0,005 à 0,01, un DS_{méthyle} allant de 0,2 à 2,0 et une MS_{hydroxypropyle} allant de 0,1 à 0,3.

5. Utilisation selon l'une ou plusieurs quelconques des revendications 1 à 4, **caractérisée en ce que** l'éther de cellulose présente un degré de polymérisation moyen DPw allant de 10 à 5000.

6. Utilisation selon l'une ou plusieurs quelconques des revendications 1 à 5, **caractérisée en ce que** la viscosité de l'éther de cellulose va de 1 à 20 000 mPa s, de préférence de 100 à 15 000 mPa s, de manière particulièrement préférée de 1000 à 12 000 mPa s, mesurée avec Brookfield RV, 20 UPM, dans l'eau de 20 °C et 20 ° dH, la viscosité étant mesurée à différentes concentrations de l'éther de cellulose : viscosité < 150 mPa s : 4,75 % en poids absolument sec (ab. sec.) ; viscosité de 150 à 250 mPa s : 2,85 % en poids ab. sec. ; viscosité de 250 à 34 000 mPa s : 1,9% en poids ab. sec. ; viscosité de 4000 à 20 000 mPa s : 1,0 % en poids ab. sec.

7. Utilisation selon l'une ou plusieurs quelconques des revendications 1 à 6, **caractérisée en ce que** l'éther de cellulose présente un taux d'humidité allant de 0 à 15 % en poids, de préférence de 1 à 10 % en poids.

8. Utilisation selon l'une ou plusieurs quelconques des revendications 1 à 7, **caractérisée en ce que** le composé se présente sous forme de poudre, 100 % des particules étant inférieures à 1000 µm, de préférence 100 % inférieures à 300 µm, mesuré avec un tamis à jet d'air.

9. Utilisation selon l'une ou plusieurs quelconques des revendications 1 à 8, **caractérisée en ce que** l'agent antimoussant liquide est un composé à base d'oxyalkylène, à base de silicone, d'alcool, d'huile minérale, à base d'acides gras, d'alkoxylate d'alcool gras et d'ester d'acide gras ou une combinaison de ceux-ci, l'alkoxylate d'alcool gras et l'ester d'acide gras, ainsi que les combinaison de ceux-ci étant préférés.

10. Utilisation selon l'une ou plusieurs quelconques des revendications 1 à 9, **caractérisée en ce que** le composé contient en outre au moins un polyacrylamide (PAA) non ionique, anionique ou cationique, de préférence avec une masse molaire supérieure à 5 Moi. et une taille de particules inférieure à 1 mm.

11. Utilisation selon l'une ou plusieurs quelconques des revendications 1 à 10, **caractérisée en ce que** l'au moins un agent antimoussant liquide est contenu dans le composé en une quantité allant de 0,5 à 15 % en poids, de préférence de 0,7 à 10 % en poids, de manière particulièrement préférée allant de 1,0 à 6 % en poids, respectivement par rapport au poids total du composé sec.

12. Utilisation selon l'une ou plusieurs quelconques des revendications 1 à 11, **caractérisée en ce que** le composé est utilisé dans un mortier sec en une quantité allant de 0,02 à 1 % en poids, de préférence de 0,05 à 0,7 % en poids, respectivement par rapport au poids total du mortier sec.
